(19) Europäisches Patentamt
European Patent Office
Office européen des brevets

(11) Veröffentlichungsnummer : **0 091 598**
**B1**

(12) # EUROPÄISCHE PATENTSCHRIFT

(45) Veröffentlichungstag der Patentschrift : **07.08.85**

(51) Int. Cl.⁴ : **C 07 F 9/18, A 01 N 57/10**

(21) Anmeldenummer : **83103055.6**

(22) Anmeldetag : **28.03.83**

(54) **Fluorethoxyphenyl-(di)thiophosphorsäureester, Verfahren zu ihrer Herstellung und ihre Verwendung zur Bekämpfung von Schädlingen.**

(30) Priorität : **08.04.82 DE 3213152**
**08.07.82 DE 3225507**

(43) Veröffentlichungstag der Anmeldung : **19.10.83 Patentblatt 83/42**

(45) Bekanntmachung des Hinweises auf die Patenterteilung : **07.08.85 Patentblatt 85/32**

(84) Benannte Vertragsstaaten :
**BE CH DE FR GB IT LI NL**

(56) Entgegenhaltungen :
**EP-A- 0 054 149**
**DE-A- 2 625 764**
**US-A- 3 755 511**

(73) Patentinhaber : **BASF Aktiengesellschaft**
**Carl-Bosch-Strasse 38**
**D-6700 Ludwigshafen (DE)**

(72) Erfinder : **Seufert, Walter, Dr.**
**Laerchenweg 19**
**D-6720 Speyer (DE)**
Erfinder : **Varwig, Juergen, Dr.**
**Am Goetzenberg 1**
**D-6900 Heidelberg (DE)**
Erfinder : **Husslein, Gerd, Dr.**
**Rubensstrasse 36**
**D-6700 Ludwigshafen (DE)**
Erfinder : **Seppelt, Wolfgang, Dr.**
**Lucas-Cranach-Strasse 8**
**D-6712 Bobenheim-Roxheim (DE)**
Erfinder : **Adolphi, Heinrich, Dr.**
**Kalmitweg 11**
**D-6703 Limburgerhof (DE)**

**EP 0 091 598 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Fluorethoxyphenyl-(di)thiophosphorsäureester, ein Verfahren zu ihrer Herstellung und Schädlingsbekämpfungsmittel, die diese Verbindungen als Wirkstoffe enthalten.

Es ist aus der US-PS 3 755 511 bekannt, daß O,O-Dialkyl-O-(Fluorethoxyphenyl)-(thiono)phosphorsäureester als fungizide, herbizide und insektizide Mittel verwendet werden können.

Es wurde gefunden, daß Fluorethoxyphenyl-(di)thiophosphorsäureester der Formel

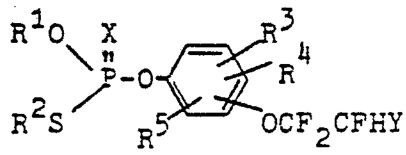

(I)

in der

$R^1$ einen Alkylrest mit 1 bis 3 Kohlenstoffatomen,

$R^2$ einen Alkylrest mit 1 bis 5 Kohlenstoffatomen, einen Alkoxyalkyl- oder Alkylthioalkylrest mit 2 bis 8 Kohlenstoffatomen oder einen Cycloalkylrest mit 3 bis 6 Kohlenstoffatomen,

$R^3$, $R^4$, $R^5$ unabhängig voneinander ein Wasserstoff, Fluor-, Chlor- oder Bromatom, einen Cyanrest oder einen gegebenenfalls Halogen-, Cyano, $C_1$-$C_4$-Alkoxy- oder $C_1$-$C_4$-Alkylthio-substituierten Alkylrest mit jeweils 1 bis 4 Kohlenstoffatomen mit 1 bis 4 Kohlenstoffatomen,

X Sauerstoff oder Schwefel,

Y Wasserstoff oder Halogen (F, Cl, Br) bedeuten.

Schädlinge aus der Klasse der Insekten, Spinnentiere und Nematoden wirksam bekämpfen. Sie sind den bekannten O,O-Dialkyl-O-(Fluorethoxyphenyl)-(thiono)phosphorsäureestern analoger Konstitution in ihrer Wirkung weit überlegen.

In Formel I stehen die Substituenten $R^1$ für Alkylreste mit 1 bis 3 Kohlenstoffatomen, wie Methyl, Ethyl, n-Propyl, 1-Propyl, $R^2$ für Alkylreste mit 1 bis 5 Kohlenstoffatomen, wie Methyl, Ethyl, n-Propyl, i-Propyl, n-Butyl, sec-Butyl, i-Butyl, n-Pentyl, 1-Methyl-n-butyl, 3-Methyl-n-pentyl, für Alkoxyalkyl- oder Alkylthioalkylreste mit 2 bis 8, vorzugsweise 2 bis 5 Kohlenstoffatomen, wie 2-Methoxy-ethyl, 2-Ethoxyethyl, 2-Isopropoxyethyl, 2-Methylthioethyl, 2-Ethylthioethyl, oder für Cycloalkylreste mit 3 bis 6 Kohlenstoffatomen, wie Cyclopentyl, Cyclohexyl, sowie $R^3$, $R^4$ und $R^5$, die verschieden sein können, für Wasserstoff, Halogen, wie Chlor, Brom oder Fluor, für Alkyl mit 1 bis 4 Kohlenstoffatomen, vorzugsweise mit 1 und 2 Kohlenstoffatomen, wie Methyl, Ethyl, n-Propyl, tert.-Butyl, die ihrerseits durch Halogenatome, besonders Fluor- oder Chlor-, ferner Cyano-, Alkoxy- oder Alkylthioreste mit jeweils 1 bis 4 Kohlenstoffatomen, wie Methoxy, Methylthio, Ethoxy, Ethylthio, substituiert sein können.

Die Fluorethoxygruppe kann, bezogen auf den Phosphorsäurerest, in 2-, 3- oder 4-Stellung angeordnet sein. Bevorzugt ist die 2-Position und insbesondere die 4-Position.

Man erhält die Fluorethoxyphenyl-(di)thiophosphorsäureester der Formel I durch Umsetzung von O,S-Dialkylphosphorsäureesterchloriden der Formel

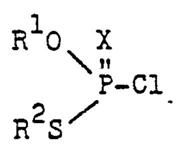

(II)

in der

$R^1$, $R^2$ und X die oben angegebenen Bedeutungen haben, gegebenenfalls in Gegenwart eines säurebindenden Mittels und gegebenenfalls in Gegenwart eines Verdünnungsmittels mit einem Fluorethoxyphenol der Formel

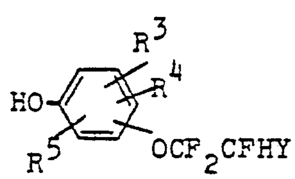

(III)

in der

$R^3$, $R^4$ und $R^5$ und Y die oben genannten Bedeutungen haben, oder mit einem Salz eines Fluorethoxyphenols der Formel III gegebenenfalls in Gegenwart eines Verdünnungsmittels.

Der Reaktionsablauf kann durch das folgende Formelschema wiedergegeben werden :

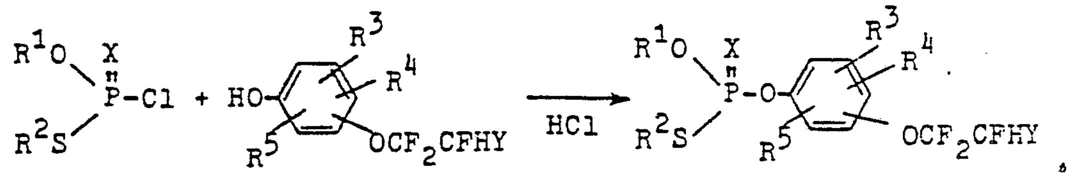


Die Umsetzung von Phosphorsäureesterchlorid der Formel II mit Phenol der Formel III kann in einem organischen Verdünnungsmittel, wie Aceton, Acetonitril, Benzol, Toluol, Chlorbenzol, Methylethylketon, oder in zwei-Phasen-Systemen, wie Toluol/Wasser, Dichlormethan/Wasser, durchgeführt werden.

Zweckmäßigerweise setzt man die 1- bis 2-molare Menge eines säurebindenden Mittels, bezogen auf Phenol der Formel III, zu. Vorzugsweise wird ein Überschuß von etwa 10 % verwendet. Geeignet sind Basen, wie Alkalimetallcarbonate, z. B. Kaliumcarbonat, Alkalihydroxide, z. B. Natriumhydroxid, oder tertiäre Amine, z. B. Triäthylamin. Anstelle von Base und Phenol kann ebenso ein Salz des Phenols mit den Phosphorsäureesterchlorid umgesetzt werden. Als Salze kommen Alkalimetallsalze, Erdalkalimetallsalze oder gegebenenfalls substituierte Ammoniumsalze, wie Alkylammoniumsalze, beispielsweise Dimethylammoniumsalze, Triethylammoniumsalze, Natrium- und Calciumsalze, in Betracht.

Die Umsetzung verläuft im allgemeinen unterhalb von 100 °C, vorzugsweise zwischen 20 und 70 °C. Man läßt die Umsetzung im allgemeinen unter Normaldruck ablaufen.

Zur Durchführung des Verfahrens setzt man die Ausgangsstoffe grundsätzlich in stöchiometrischem Verhältnis ein. Ein Überschuß der einen oder anderen Reaktionskomponente kann in einigen Fällen Vorteile bringen. Zweckmäßigerweise verwendet man auf 1 Mol Phenol 0,9 bis 1,1 Mole Phosphorsäureesterchlorid.

Das Reaktionsgemisch wird in üblicher Weise aufgearbeitet, z. B. durch Versetzen mit Wasser und Trennen der Phasen. Die Rohprodukte können durch Destillation oder Säulenchromatographie gereinigt werden.

O,S-Dialkylphosphorsäureesterchloride der Formel II sind bekannt und können nach bekannten Verfahren hergestellt werden (DE-OS 26 42 982 ; J. Org. Chem. *30*, 3217 (1965)).

Die Fluorethoxyphenole der Formel III sind teilweise bekannt (DE-OS 23 12 906) oder können durch Diazotieren und Verkochen (Houben-Weyl, Band 6/1c, S. 247, *1976*) aus entsprechenden Anilinen erhalten werden. Solche Aniline ihrerseits sind z. B. aus Z. Naturforschung 28 c, 653, *1973* und Bull. Soc. chim., 5[e] série, 1957, S. 581 bekannt.

Die Halogenierung der Phenole kann ebenfalls nach bekannten Verfahren durchgeführt werden (EP 22 954).

Folgende weitere Verfahren führen ebenfalls zu erfindungsgemäßen Verbindungen :

Fluorethoxyphenyl-thiophosphorsäureester der Formel Ia lassen sich in einer Arbusow-Reaktion durch Umsetzung von Phosphorigsäureestern der formel IV mit Sulfenylchloriden der Formel $R^2SCl$ nach folgendem Reaktionsschema herstellen :

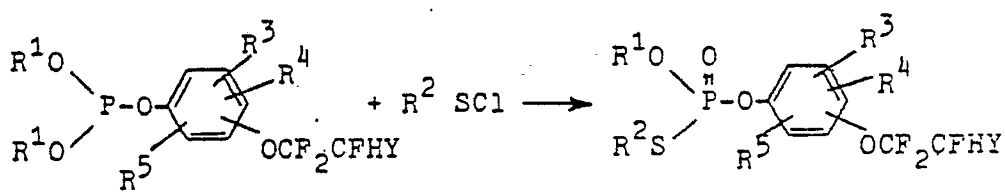

(IV) (Ia)

Ebenso sind die Fluorethoxyphenyl-thiophosphorsäureester der Formel Ia durch Alkylierung von Phosphorsäureestersalzen der Formel V mit Alkylierungsmitteln der Formel $R^2Z$ zugänglich :

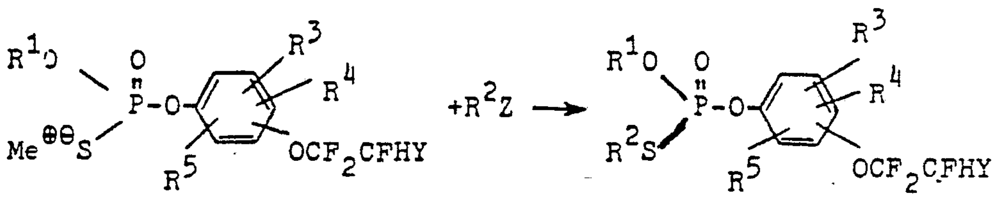

(V) (Ia)

Außerdem lassen sich Phosphorsäureesterdichloride der Formel VI nacheinander mit Alkoholen und Mercaptanen der Formeln $R^1OH$ bzw. $R^2SH$ zu Verbindungen der Formel I umsetzen :

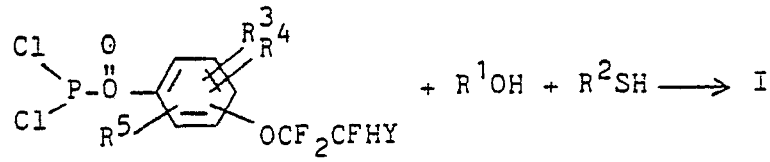

(VI)

In diesen Reaktionsschemata haben die Substituenten $R^1$, $R^2$, $R^3$, $R^4$ und $R^5$ sowie X die oben genannten Bedeutungen. $Me^{\oplus}$ steht für ein Metallkation oder ein gegebenenfalls durch Alkylgruppen substituiertes Ammoniumion und Y bedeutet Halogenid, beispielsweise Jodid, Bromid, Chlorid, oder Alkylsulfat, beispielsweise Methylsulfat. Die Auswahl unter einem der vorgenannten Herstellverfahren wird i. a. nach wirtschaftlichen Gesichtspunkten getroffen.

a) Herstellung von 4-(2-Brom,1,1,2-trifluorethoxy)nitrobenzol

278 g 4-Nitrophenol und 56 g Kaliumhydroxid wurden in 800 ml DMF gelöst. Bei 40 °C wurden 179 g Bromtrifluorethylen nach und nach zugeführt und anschließend 2 Stunden bei 60 °C nachgerührt. Das Lösungsmittel wurde unter vermindertem Druck in einem Rotationsverdampfer entfernt, der Rückstand in Eiswasser gegossen und mit 3 × 500 ml Methylenchlorid extrahiert. Der Extrakt wurde mit verdünnter Natronlauge und Wasser gewaschen, über $Na_2SO_4$ getrocknet, das Lösungsmittel entfernt. Bei der Destillation gehen bei 114 °C/1,3 mbar 279,5 g reines Produkt über.

b) Herstellung von 4-(2-Chlor-1,1,2-trifluorethoxy)nitrobenzol

Man verfährt wie vorstehend beschrieben unter Verwendung einer entsprechenden Menge Chlortrifluorethylen. Es wurden 327 g der Verbindung mit einem Siedepunkt von 80 °C/0,3 mbar, d. h. 64 % Ausbeute erhalten.

c) 4-(2-Brom-1,1,2-trifluorethoxy)anilin

275 g 4-(2-Brom-1,1,2-trifluorethoxy)nitrobenzol wurden mit 700 ml absolutem Essigsäureethylester versetzt und mit Hilfe von 20 g Palladium auf Aktivkohle hydriert. Der Katalysator wurde abfiltriert und das Lösungsmittel entfernt. Es wurden 251 g der Verbindung erhalten, die nach NMR-Analyse rein war.

Ebenso wurden hergestellt:

| | | |
|---|---|---|
| 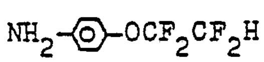 | Sdp. 81 °C/0,2 mbar | 73 % Ausbeute |
| 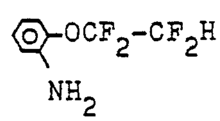 | sofort weiter umgesetzt | 98 % Ausbeute |
| 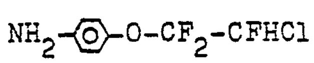 | Sdp. 130 °C/6 mbar | 86 % Ausbeute |
| 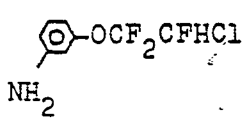 | Sdp. 86 °C/0,1 mbar | 76 % Ausbeute |

d) 4-(2-Brom-1,1,2-trifluorethoxy)phenol

In 400 ml 2,5 N Schwefelsäure wurden bei 10 °C erst 40 g 4-(2-Brom-1,1,2-trifluorethoxy)anilin, dann bei 0 °C 11 g Natriumnitrit in 30 ml Wasser eingetropft und eine Stunde bei 10 °C nachgerührt.

Es wurde eine Wasserdampfdestillation von 100 g $CuSO_4$ und 33 g Harnstoff in 500 ml Wasser in Gang gesetzt und die schwefelsaure Lösung nach und nach zugesetzt. Das Destillieren wurde noch bis 15 min nach Ende des Zutropfens fortgesetzt. Das Wasserdampfdestillat wurde dann in der Kälte mit Methylenchlorid ausgeschüttelt, die Lösung in Methylenchlorid einmal mit Eiswasser gewaschen, über Natriumsulfat getrocknet, das Lösungsmittel entfernt und bei 86 °C/0,15 mbar destilliert.

22 g des Phenols wurden erhalten. In gleicher Weise wurden aus den oben beschriebenen Anilinen folgende Phenole hergestellt:

| | Sdp. | Ausbeute |
|---|---|---|
| 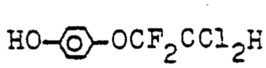 | 80 °C/0,15 mbar | 70 % |

(Fortsetzung)

| | Sdp. | Ausbeute |
|---|---|---|
| 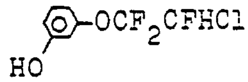 | 87 °C/0,3 mbar | 60 % |
| 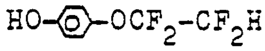 | 80 °C/1,5 mbar | 60 % |
| 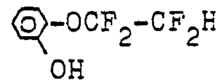 | 55 °C/0,6 mbar | 43 % |
| 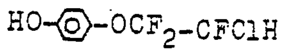 | 69 °C/0,15 mbar | 79 % |

e) 2-Chloro-4-(2-Brom-1,1,2-trifluorethoxy)phenol

12,2 g 4-(2-Brom-1,1,2-trifluorethoxy)phenol und 5 Tropfen Diphenylsulfid wurden in 30 ml Eisessig gelöst und nach und nach 6,1 g Sulfurylchlorid bei 25 °C zugesetzt. Nach 3 Stunden bei 25 °C wurden die flüchtigen Bestandteile entfernt, mit 300 ml Methylenchlorid aufgenommen und mit je 100 ml 10 % $NaHCO_3$-Lösung und Wasser gewaschen, über $Na_2SO_4$ getrocknet und bei 82 °C/0,3 mbar destilliert. Ausbeute 12,6 g.

Ebenso wurden hergestellt :

| | Sdp. | Ausbeute |
|---|---|---|
| 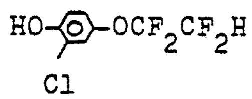 | 50 °C/0,4 mbar | 93 % |
| 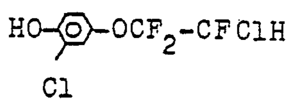 | 55 °C/0,15 mbar | 84 % |

f) 2-Bromo-4-(2-Brom-1,1,2-trifluorethoxy)phenol

Zu einer Lösung von 12,2 g 4-(2-Brom-1,1,2-trifluorethoxy)phenol in 100 ml wasserfreiem Chlorform wurden 7,2 g Brom in 30 ml Chloroform bei 25 °C zugetropft und die Mischung 12 Stunden bei 25 °C gerührt.

Das Lösungsmittel wurde entfernt. Durch Destillation bei 100 °C/0,4 mbar erhielt man 15,5 g reines Produkt.

Ebenso wurden erhalten :

| | Sdp. | Ausbeute |
|---|---|---|
| 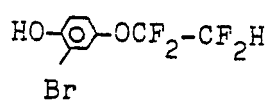 | 45 °C/0,15 mbar | 97 % |
| 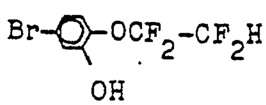 | 51 °C/0,15 mbar | 90 % |
| 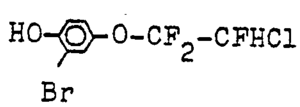 | 80 °C/0,6 mbar | 95 % |

Beispiel 1

O-Ethyl-S-propyl-O-[4-1,1,2,2-tetrafluorethoxy)phenyl]-monothiophosphorsäureester

Zu 6,3 g 4-(1,1,2,2-tetrafluorethoxy)phenol und 6,9 g Kaliumcarbonat in 100 ml Acetonitril wurden 6,1 g O-Ethyl-S-propylthiophosphorsäureesterchlorid zugetropft. Dann wurde 14 Stunden bei 50 °C und anschließend 12 Stunden bei Raumtemperatur gerührt.

Dann wurde das Lösungsmittel im Rotationsverdampfer entfernt, der Rückstand mit 400 ml Toluol und 100 ml Wasser versetzt, die Phasen getrennt und die organische Phase mit 2 n Natronlauge und anschließend mit Wasser gewaschen. Nach dem Trocknen mit Natriumsulfat wurden das Lösungsmittel und flüchtige Verunreinigungen unter vermindertem Druck bei 40 °C und 0,1 mbar entfernt. Als Rückstand wurden 8,1 g Produkt vom Brechungsindex $n_D^{23}$ = 1,467 1 erhalten.

## Beispiel 2

O-Ethyl-S-propyl-O-[2-Bromo-4-(2-Brom-1,1,2-trifluorethoxy)phenyl]monothiophosphorester

Zu 6,9 g 2-Brom-4-(2-Brom-1,1,2-trifluorthoxy)phenol und 6,9 g Kaliumcarbonat in 100 ml Acetonitril wurden 4,0 g O-Ethyl-S-propylthiophosphorsäureesterchlorid zugetropft.

Dann wurde 4 Stunden bei 50 °C und anschließend 12 Stunden bei Raumtemperatur gerührt.

Dann wurde das Lösungsmittel im Rotationsverdampfer entfernt, der Rückstand mit 400 ml Toluol und 100 ml Wasser versetzt, die Phasen getrennt und die organsiche Phase mit 2 n Natronlauge und anschließend mit Wasser gewaschen. Nach dem Trocknen mit Natriumsulfat wurden das Lösungsmittel und flüchtige Verunreinigungen unter vermindertem Druck entfernt. Als Rückstand wurden 7,0 g Produkt vom Brechungsindex $n_D^{21}$ = 1,515 4 erhalten.

## Beispiel 3

O-Ethyl-S-propyl-O-[2-Chloro-4(2-Brom-1,1,2-trifluorethoxy)phenyl]-monothiophosphorsäureester

Zu 4,9 g 2-Chloro-4-(2-Brom-1,1,2-trifluorethoxy)phenol und 6,9 g Kaliumcarbonat in 100 ml Acetonitril wurden 3,2 g O-Ethyl-S-propylthiophosphorsäureesterchlorid zugetropft. Dann wurde 4 Stunden bei 50 °C und anschließend 12 Stunden bei Raumtemperatur gerührt.

Dann wurde das Lösungsmittel im Rotationsverdampfer entfernt, der Rückstand mit 400 ml Toluol und 100 ml Wasser versetzt, die Phasen getrennt und die organische Phase mit 2 n Natronlauge und anschließend mit Wasser gewaschen. Nach dem Trocken mit Natriumsulfat wurden das Lösungsmittel und flüchtige Verunreinigungen unter vermindertem Druck entfernt. Als Rückstand wurden 6,0 g Produkt vom Brechungsindex $n_D^{21}$ = 1,504 4 erhalten.

Durch sinngemäße Verwendung anderer Ausgangsstoffe bzw. Zwischenprodukte wurden die in der nachstehenden Tabelle 1 aufgeführten Stoffe erhalten, wobei $R^1$ in der Formel Ethyl bedeutet.

Tabelle 1

| Nr. | Y CFH-$CF_2$O- | $R^3R^4R^5$ | X | $SR^2$ | $n_D$ |
|---|---|---|---|---|---|
| 1 | 4-$CF_2$H-$CF_2$O- | H | O | 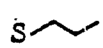 | $n_D^{23}$ 1,467 1 |
| 2 | " | " | O | 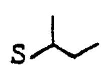 | $n_D^{23}$ 1,467 1 |
| 3 | " | " | O | 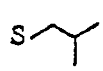 | $n_D^{21}$ 1,467 7 |
| 4 | " | " | O | 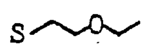 | $n_D^{24}$ 1,466 3 |
| 5 | " | " | S | 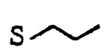 | $n_D^{21}$ 1,498 0 |
| 6 | " | " | S | 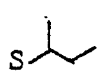 | $n_D^{24}$ 1,495 5 |
| 7 | " | " | S | 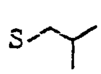 | $n_D^{24}$ 1,492 1 |

Tabelle 1 (Fortsetzung)

| Nr. | Y CFH-$CF_2$O- | $R^3R^4R^5$ | X | $SR^2$ | $n_D$ |
|---|---|---|---|---|---|
| 8 | " | 2-Cl | O | 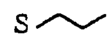 | $n_D^{20}$ 1,479 1 |
| 9 | " | " | O | 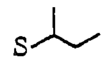 | $n_D^{20}$ 1,480 4 |
| 10 | " | " | O | 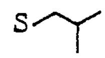 | $n_D^{20}$ 1,477 8 |
| 11 | " | " | S | 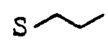 | $n_D^{20}$ 1,502 8 |
| 12 | " | " | S | 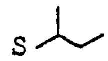 | $n_D^{20}$ 1,505 9 |
| 13 | " | 2-Br | O | 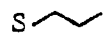 | $n_D^{21}$ 1,489 8 |
| 14 | " | " | O | 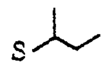 | $n_D^{21}$ 1,488 7 |
| 15 | " | " | O | 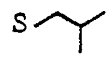 | $n_D^{20}$ 1,487 9 |
| 16 | " | " | S | 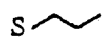 | $n_D^{22}$ 1,513 5 |
| 17 | " | " | S | 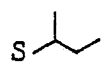 | $n_D^{22}$ 1,517 0 |
| 18 | 2 $CF_2H$-$CF_2$O- | H | O | 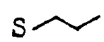 | $n_D^{20}$ 1,470 2 |
| 19 | " | " | O | 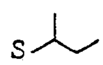 | $n_D^{21}$ 1,467 0 |
| 20 | " | " | O | 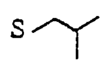 | $n_D^{21}$ 1,466 2 |
| 21 | " | 4-Br oder 6-Br | O | 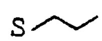 | $n_D^{23}$ 1,488 5 |
| 22 | " | " | O | 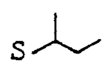 | $n_D^{23}$ 1,486 8 |
| 23 | 4-ClCFH-$CF_2$O- | H | O | 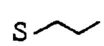 | $n_D^{20}$ 1,485 1 |
| 24 | " | " | O | 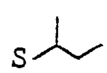 | $n_D^{22}$ 1,483 8 |
| 25 | " | " | O | 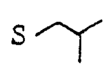 | $n_D^{22}$ 1,483 2 |
| 26 | " | " | O | 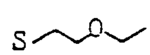 | $n_D^{22}$ 1,482 2 |

Tabelle 1 (Fortsetzung)

| Nr. | Y CFH-$CF_2$O- | $R^3R^4R^5$ | X | $SR^2$ | $n_D$ |
|---|---|---|---|---|---|
| 27 | " | " | S | 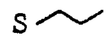 | $n_D^{22}$ 1,508 0 |
| 28 | " | " | S | 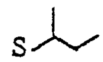 | $n_D^{25}$ 1,509 0 |
| 29 | " | " | S | 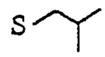 | $n_D^{22}$ 1,508 0 |
| 30 | " | 2-Cl | O | 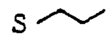 | $n_D^{22}$ 1,493 3 |
| 31 | " | " | O | 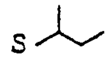 | $n_D^{24}$ 1,492 3 |
| 32 | " | " | O | 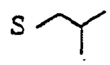 | $n_D^{25}$ 1,487 7 |
| 33 | 4-ClCFH-$CF_2$O- | 2-Cl | O | 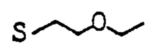 | $n_D^{25}$ 1,489 8 |
| 34 | " | " | S | 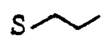 | $n_D^{25}$ 1,515 1 |
| 35 | " | " | S | 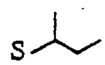 | $n_D^{25}$ 1,517 1 |
| 36 | " | " | S | 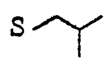 | $n_D^{22}$ 1,516 2 |
| 37 | " | 2-Br | O | 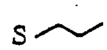 | $n_D^{22}$ 1,504 2 |
| 38 | " | " | O | 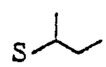 | $n_D^{22}$ 1,504 3 |
| 39 | " | " | O | 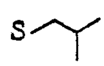 | $n_D^{22}$ 1,502 2 |
| 40 | " | " | O | 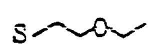 | $n_D^{26}$ 1,499 1 |
| 41 | " | " | S | 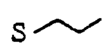 | $n_D^{26}$ 1,526 0 |
| 42 | " | " | S | 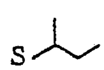 | $n_D^{25}$ 1,528 2 |
| 43 | " | " | S | 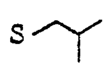 | $n_D^{26}$ 1,525 8 |
| 44 | 4-BrCFH-$CF_2$O- | H | O | 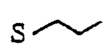 | $n_D^{23}$ 1,495 1 |
| 45 | " | " | O | 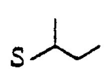 | $n_D^{23}$ 1,494 1 |

Tabelle 1 (Fortsetzung)

| Nr. | Y CFH-$CF_2$O- | $R^3R^4R^5$ | X | $SR^2$ | $n_D$ |
|---|---|---|---|---|---|
| 46 | " | " | O | 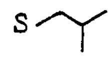 | $n_D^{23}$ 1,491 9 |
| 47 | " | " | S | 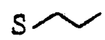 | $n_D^{23}$ 1,517 1 |
| 48 | " | 2-Cl | O | 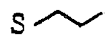 | $n_D^{21}$ 1,504 4 |
| 49 | " | " | O | 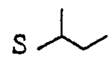 | $n_D^{21}$ 1,501 9 |
| 50 | " | 2-Br | O | 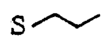 | $n_D^{21}$ 1,515 4 |
| 51 | " | " | O | 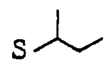 | $n_D^{21}$ 1,512 6 |
| 52 | 3-ClCFH-$CF_2$O- | H | O | 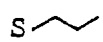 | $n_D^{22}$ 1,484 0 |
| 53 | " | H | O | 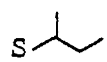 | $n_D^{22}$ 1,481 2 |
| 54 | " | 4-Cl oder 6-Cl | O | 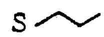 | $n_D^{23}$ 1,490 7 |
| 55 | " | " | O | 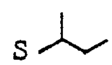 | $n_D^{21}$ 1,490 2 |

Beispiele für weitere Verbindungen, die nach dem beschriebenen Verfahren erhalten werden können, sind in der Tabelle 2 angegeben.

Tabelle 2

| YCFH-$CF_2$O- | $R^3R^4R^5$ | X | $SR^2$ | $OR^1$ |
|---|---|---|---|---|
| 4-$CF_2$H-$CF_2$-O- | H | O | 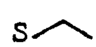 | $OCH_3$ |
| " | 2-Cl | O | 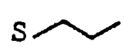 | " |
| " | " | O | 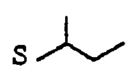 | " |
| " | 2-Br | O | 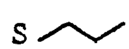 | " |
| " | " | O | 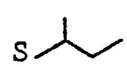 | " |
| " | 2,6-$Cl_2$ | O | 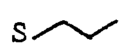 | $OC_2H_5$ |

Tabelle 2 (Fortsetzung)

| $YCFH-CF_2O-$ | $R^3R^4R^5$ | X | $SR^2$ | $OR^1$ |
|---|---|---|---|---|
| " | " | O | 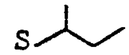 | " |
| " | 2,6-Br | O | 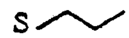 | " |
| " | " | O | 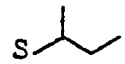 | " |
| $3-CF_2HCF_2O-$ | H | O | 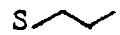 | " |
| " | " | O | 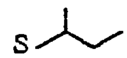 | " |
| " | " | O | 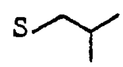 | " |
| " | " | S | 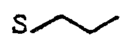 | " |
| $3-CF_2HCF_2O-$ | 4-Cl | O | 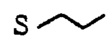 | $OC_2H_5$ |
| " | " | O | 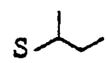 | " |
| " | 6-Cl | O | 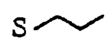 | " |
| " | " | O | 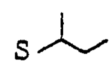 | " |
| " | 4-Br | O | 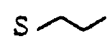 | " |
| " | " | O | 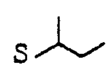 | " |
| " | 6-Br | O | 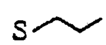 | " |
| " | " | O | 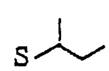 | " |
| $2-CF_2HCF_2O-$ | 4-Br | O | 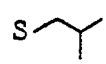 | " |
| " | " | S | 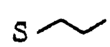 | " |
| " | 4-Cl | O | 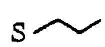 | " |
| " | " | O | 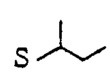 | " |

Tabelle 2 (Fortsetzung)

| $YCFH-CF_2O-$ | $R^3R^4R^5$ | X | $SR^2$ | $OR^1$ |
|---|---|---|---|---|
| " | " | O | S 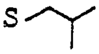 | " |
| " | " | S | S 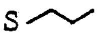 | " |
| " | 6-Cl | O | S 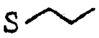 | " |
| " | " | O | S 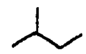 | " |
| " | " | O | S 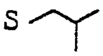 | " |
| $2-CF_2HCF_2O-$ | 6-Cl | O | S 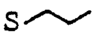 | $OC_2H_5$ |
| " | $4,6-Cl_2$ | O | S 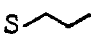 | " |
| " | " | O | S 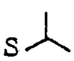 | " |
| $4-CFClHCF_2O-$ | " | O | S 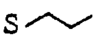 | " |
| " | " | O | S 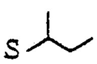 | " |
| " | " | O | S 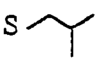 | " |
| " | " | S | S 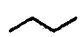 | " |
| " | $4,6-Br_2$ | O | S 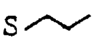 | " |
| " | " | O | S 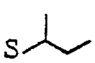 | " |
| $3-CFClHCF_2O-$ | 4-Br | O | S 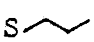 | " |
| " | " | O | S 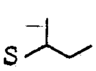 | " |
| " | 6-Br | O | S 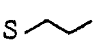 | " |
| " | " | O | S 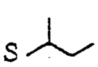 | " |
| $2-CFClHCF_2O-$ | H | O | S 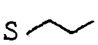 | " |

Tabelle 2 (Fortsetzung)

| $YCFH-CF_2O-$ | $R^3R^4R^5$ | X | $SR^2$ | $OR^1$ |
|---|---|---|---|---|
| " | H | O | 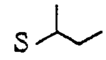 | " |
| " | H | O | 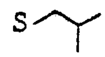 | " |
| $2-CFClHCF_2O-$ | H | S | 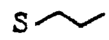 | $OC_2H_5$ |
| " | 4-Cl | O | 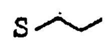 | " |
| " | " | O | 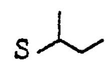 | " |
| " | " | O | 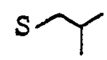 | " |
| " | " | S | 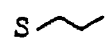 | " |
| " | 4-Br | O | 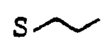 | " |
| " | " | O | 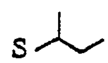 | " |
| " | " | O | 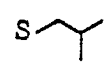 | " |
| " | " | S | 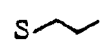 | " |
| " | $4,6-Cl_2$ | O | 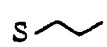 | " |
| " | $4,6-Br_2$ | O | 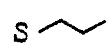 | " |
| $3-CFBrHCF_2O-$ | H | O | 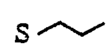 | " |
| " | H | O | 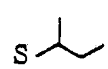 | " |
| " | H | O | 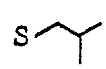 | " |
| " | 4-Cl | O | 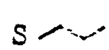 | " |
| " | 6-Cl | O | 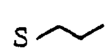 | " |
| " | 4-Br | O | 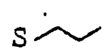 | " |

Tabelle 2 (Fortsetzung)

| $YCFH-CF_2O-$ | $R^3R^4R^5$ | X | $SR^2$ | $OR^1$ |
|---|---|---|---|---|
| $3-CFBrHCF_2O-$ | 6-Br | O | S 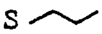 | " |
| $2-CFBrHCF_2O-$ | H | O | S 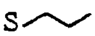 | " |
| " | H | O | S 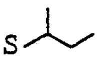 | " |
| " | H | O | S 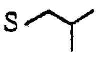 | " |
| " | H | S | S 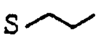 | " |
| " | 4-Cl | O | S 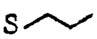 | " |
| " | " | O | S 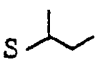 | " |
| " | " | O | S 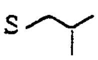 | " |
| " | " | S | S 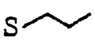 | " |
| " | 4-Br | O | S 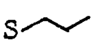 | " |
| " | " | O | S 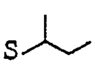 | " |
| " | " | O | S 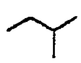 | " |
| " | " | S | S 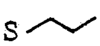 | " |
| " | 6-Cl | O | S 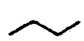 | " |
| " | " | O | S 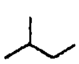 | " |

Zur vergleichenden Prüfung der biologischen Wirkung der erfindungsgemäßen Wirkstoffe wurde als Vergleichsmittel das aus Beispiel 3 der US-PS 3 755 511 bekannte Mittel

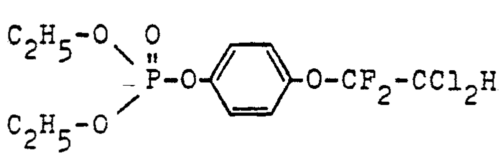

in die Untersuchung einbezogen.

Kontaktwirkung auf Schaben (Blatta orientalis)

Der Boden eines 1 l-Weckglases wurde mit der acetonischen Lösung des Wirkstoffes behandelt. Nach Verdunsten des Lösungsmittels setzte man je Glas 5 adulte Schaben. Die Mortalitätsrate wird nach 48 Stunden bestimmt. Bei diesem Versuch erzielten die Wirkstoffe der Beispiele 1, 2, 4, 8, 9, 10, 13, 14, 15, 18, 19, 20, 21, 22, 23, 24, 25, 30, 44, 53 und 54 in einer Menge zwischen 0,02 und 0,1 mg eine vollständige Abtötung der Tiere während das Vergleichsmittel in einer Menge von 1 mg weniger als 50 % Mortalität erzielte.

Kontaktwirkung auf Moskito-Larven (Aedes aegypti)

200 ml Leitungswasser wurden mit der Wirkstoffaufbereitung versetzt und darauf mit 30 bis 40 Moskito-Larven im 4. Larvenstadium besetzt. Die Versuchstemperatur betrug 22 °C. Nach 24 Stunden wurde die Wirkung ermittelt.

Die Wirkung war bei den Stoffen der Beispiele 8, 9, 13, 14, 15, 21, 22, 28, 31, 34, 35, 37, 42, 43, 45, 47, 48, 49, 50, 51 und 54 vollständig — je nach Stoff — wenn die Anwendungskonzentration 0,000 2 bis 0,01 ppm war, während das Vergleichsmittel in mindestens 100-fach stärkerer Konzentration nur 50 %ige Wirkung erzielte.

Zuchtversuch mit Stubenfliegen-Larven (Musca domestica)

Je 4,5 ml Magermilch füllte man in 50 ml Pennicillingläser und versetzte sie darauf mit 0,5 ml der wäßrigen Wirkstoffaufbereitung. Nach kurzem Mischen Fügte man ein Wattebällchen (Firma Hartmann, Maintal) dazu und belegte dieses mit ca. 50 Ei-Larven der Stubenfliege. Die Gläser lagerte man abgedeckt bei Raumtemperatur und beurteilte die Entwicklung nach 7 Tagen.

Bei den Beispielen 1, 2, 3, 5, 6, 7, 8, 10, 11, 12, 13, 14, 15, 18, 19, 20, 21, 22, 31, 32, 33, 34, 35, 37, 38, 39, 40, 41, 42, 43, 45, 46, 47, 48, 49, 50, 51, 52, 53 und 54 betrug die Konzentration zur Erzielung 100 %iger Mortalität 0,2 bis 2 ppm. Das Vergleichsmittel war noch bei 20 ppm unwirksam.

Kontaktwirkung auf Baumwollwanzen (Dysdercus intermedius)

Petrischalen von 10 cm Durchmesser wurden mit 1 ml der acetonischen Wirkstofflösung ausgekleidet. Nach Verdunsten des Lösungsmittels besetzte man die Schalen mit je 20 Larven des vorletzten Stadiums und registrierte die Wirkung nach 24 Stunden.

Vollständige Wirkung erzielten die Stoffe der Beispiele 1, 2, 3, 4, 8, 9, 10, 13, 19, 52 und 53 bei 0,002 bis 0,01 mg ; das Vergleichsmittel war erst bei 0,2 mg absolut wirksam.

Fraß- und Kontaktwirkung auf Raupen der Kohlenschabe (Plutella maculipennis)

Blätter von jugen Kohlpflanzen wurden 3 Sekunden in die wäßrige Wirkstoffemulsion getaucht und nach kurzem Abtropfen auf einen angefeuchteten Filter in eine Petrischale gelegt. Das Blatt wurde darauf mit 10 Raupen des 4. Stadiums belegt. Nach 48 Stunden beurteilte man die Wirkung. Sie lag zwischen ca. 80 und 100 % Mortalität bei den Stoffen der Beispiele 1, 2, 3, 4, 5, 6, 8, 10, 12, 13, 14, 15, 18, 19, 20, 21, 22, 24, 26, 30, 33, 37, 45, 46, 47, 48, 49, 52, 53 und 54, wenn die Anwendungskonzentration 0,000 4 bis 0,002 % betrug ; das Vergleichsmittel erzielte 80 %ige Wirkung bei 0,04 %.

Kontaktwirkung auf Blattläuse (Aphis fabae) Spritzversuch

Getopfte Bohnenpflanzen (Vicia faba) mit starken Blattlauskolonien wurden in der Spritzkammer mit den wäßrigen Wirkstoffaufbereitungen tropfnaß gespritzt. Die Auswertung erfolgte nach 24 Stunden.

Die Stoffe der Beispiele 1, 2, 3, 4, 8, 9, 10, 12, 14, 15, 17, 18, 19, 20, 21, 22, 23, 24, 25, 30, 32, 33 und 45 erzielten i.a. vollständige Wirkung in einer Konzentration von 0,004 bis 0,02 % ; das Vergleichsmittel hatte bei 0,1 % nur teilweise Wirkung.

Systemische Wirkung auf Raupen (Prodenia litura)

200 ml Quarzsand wurden in 250 ml Polystyrolbecher in Paletten zu 8 Gefäßen gegeben. Man belegte jeden Becher mit 5 Maiskörnern, ca. 1 cm unter die Oberfläche. Darauf befeuchtete man mit je 50 ml Wasser und deckte mit einer passenden transparenten Kunststoffhaube ab. Nach 8 Tagen wurden die Paletten abgedeckt, nach 10 Tagen erfolgte die Behandlung. Dabei gießt man 40 ml der wäßrigen Wirkstoffaufbereitung an die Pflanzen und deckte nach einem weiteren Tag mit 50 ml trockenem Quarzsand ab. Hierdurch soll ein Kontakt der Versuchstierre mit der behandelten Oberfläche vermieden werden.

Auf jeden Becher stellt man einen Plastik-Zylinder (Durchmesser 7 cm), belegt mit je 5 Raupen im 3. Larvenstadium und deckt den Zylinder mit einem Drahtgazedeckel ab.

Die Wirkstofflösung der Beispiele 1, 3, 4, 5, 8, 10, 13, 18, 19, 20, 22, 30 und 52 erwies sich bei 0,004 bis 0,02 %igem Ansatz im allgemeinen als voll wirksam, während das Vergleichsmittel bei 0,1 % noch unwirksam war (keine systemische Wirkung bei technisch infragekommender Aufwandmenge).

Wirkung auf Spinnmilben (Tetranychus telarius) A

Getopfte Buschbohnen, die das erste Folgeblattpaar entwickelt haben und einen starken Besatz aller Stadien der Spinnmilbe Tetranychus telarius trugen, wurden in der Spritzkabine mit der wäßrigen Wirkstoffaufbereitung tropfnaß gespritzt. Die Pflanzen kamen dazu auf einen Drehteller und wurden von allen Seiten mit 50 ml Spritzbrühe besprüht. Der Sprühvorgang dauerte ca. 22 Sekunden. Nach 8 Tagen wurden die Pflanzen auf lebene Spinnmilben untersucht.

Die Stoffe der Beispiele 1, 2, 3, 5, 13, 14, 21, 23, 24, 25, 26, 27, 29, 30, 31, 32, 33, 34, 37, 38, 39, 40, 44, 45, 46, 48, 49, 51, 52, 53 und 54 waren bei 0,002 bis 0,01 %igem Wirkstoffansatz i.a. voll wirksam, während das Vergleichsmittel bei 0,1 % nur schlecht wirkte.

Wirkung auf Spinnmilben (Tetrachynus telarius) B

Getopfte Buschbohnen, die das zweite Folgeblattpaar zeigten, wurden in der Spritzkabine mit der wäßrigen Wirkstoffaufbereitung tropfnaß gespritzt. Die Pflanzen kamen dazu auf den Drehtelller und wurden von allen Seiten mit insgesamt 50 ml Spritzbrühe besprüht. Der Sprühvorgang dauerte ca. 22 Sekunden. Nach 24 Stunden infizierte man die Pflanzen mit Blattstücken, die stark mit Spinnmilben besetzt waren. Die Beurteilung der Wirkung erfolgte nach 10 Tagen. Geprüft wurde von 0,1 % Wirkstoff an in fallenden Konzentrationen.

Die Wirkung der Stoffe gemäß Beispiel 3, 5, 23, 32, 33, 37, 38, 39, 40, 46, 48, 51 und 53 war praktisch vollständig bis herunter zu 0,002 %. Das Vergleichsmittel war mindestens 10 fach weniger wirksam als der geringstwirkende erfindungsgemäße Wirkstoff.

Kontaktwirkung auf Zecken (Ornithodorus moubata)

Die Prüfung erfolgte an jungen Zecken, die erst einmal Blut aufgenommen haben. Je 5 Tiere wurden in einem TEEFIX-Beutel 5 Sekunden in die wäßrige Wirkstoffaufbereitung getaucht. Der Beutel wurde frei aufgehängt. Nach 48 Stunden ermittelte man die Mortalitätsrate. Die Versuchstemperatur betrug 25 bis 26 °C.

Absolut wirksam waren die Stoffe der Beispiele 2, 3, 4, 8, 9, 10, 14, 20, 21, 22, 25, 26, 30, 33 und 53 in einer Konzentration von 0,02, teilweise 0,000 4 bis 0,01 % ; das Vergleichsmittel war bei 0,1 % noch unwirksam.

Wirkung auf Wurzelgallennematoden (Meloidogyne incognita)

Junge Tomatenpflanzen wurden in je 500 g Komposterde gepflanzt, die stark mit Wurzelgallennematoden infiziert war. Nach 3 Tagen erfolgte die Behandlung mit der wäßrigen Wirkstoffaufbereitung durch Spritzen von 50 ml Aufbereitung in der Spritzkammer. Nach 6 bis 8 Wochen bonitierte man die Wurzeln auf Gallenbildung.

Die Stoffe der Beispiele 1, 3, 4, 5, 18, 19, 20, 21, 23, 24, 25, 26, 27, 46, 47, 48, 49, 50, 51, 52 und 53 hemmten die Gallenbildung i.a. vollständig bei 0,02 bis 0,1 %igem Ansatz ; Das Vergleichsmittel war noch bei 0,1 % ungenügend wirksam.

## Patentansprüche

1. Fluorethoxyphenyl-(di)thiophosphorsäureester der Formel

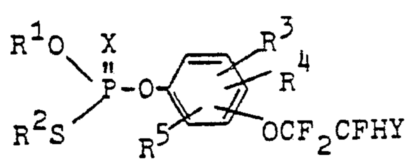

(I)

in der

$R^1$ einen Alkylrest mit 1 bis 3 Kohlenstoffatomen,

$R^2$ einen Alkylrest mit 1 bis 5 Kohlenstoffatomen, einen Alkoxyalkyl- oder Alkylthioalkylrest mit 2 bis 8 Kohlenstoffatomen oder einen Cycloalkylrest mit 3 bis 6 Kohlenstoffatomen,

$R^3$ $R^4$, $R^5$ unabhängig voneinander ein Wasserstoff-, Fluor-, Chlor-, oder Bromatom, einen Cyanrest oder einen gegebenenfalls Halogen-, Cyano-, $C_1$-$C_4$-Alkoxy- oder $C_1$-$C_4$-Alkylthio-substituierten Alkylrest mit jeweils 1 bis 4 Kohlenstoffatomen,

X Sauerstoff oder Schwefel,

Y ein Wasserstoff-, Fluor-, Chlor-, oder Bromatom bedeuten.

2. Schädlingsbekämpfungsmittel, enthaltend einen Fluorethoxyphenyl-(di)thiophosphorsäureester der Formel I gemäß Anspruch 1.

3. Schädlingsbekämpfungsmittel, enthaltend inerte Zusatzstoffe und einen Fluorethoxyphenyl-(di)thiophosphorsäureester der Formel I gemäß Anspruch 1.

4. Verwendung von Fluorethoxyphenyl-(di)thiophosphorsäureestern der Formel I gemäß Anspruch 1 zur Bekämpfung von Schädlingen.

5. Verfahren zur Bekämpfung von Schädlingen, dadurch gekennzeichnet, daß man einen Fluorethoxyphenyl-(di)thiophosphorsäureester der Formel I gemäß Anspruch 1 auf die Schädlinge und/oder deren Lebensraum einwirken läßt.

6. Verfahren zur Herstellung von Fluorethoxyphenyl-(di)thiophosphorsäureestern der Formel I gemäß Anspruch 1, dadurch gekennzeichnet, daß man ein O,S-Dialkylphosphorsäureesterchlorid der Formel II

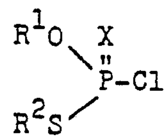

(II)

in der

$R^1$, $R^2$ und X die im Anspruch 1 angegebene Bedeutungen haben, gegebenenfalls in Gegenwart eines säurebindenden Mittels und gegebenenfalls in Gegenwart eines Verdünnungsmittels mit einem Fluorethoxyphenol der Formel III

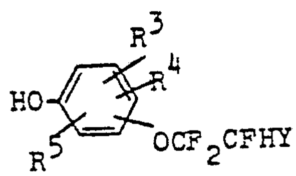

(III)

in der

$R^3$, $R^4$ und $R^5$ die im Anspruch 1 genannten Bedeutungen haben, oder mit einem Salz eines Fluorethoxyphenols der Formel III gegebenenfalls in Gegenwart eines Verdünnungsmittels umsetzt.

**Claims**

1. A fluoroethoxyphenyl (di)thiophosphate of the formula

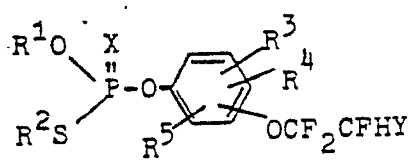

(I)

where

$R^1$ is alkyl of 1 to 3 carbon atoms,

$R^2$ is alkyl of 1 to 5 carbon atoms, alkoxyalkyl or alkylthioalkyl, each of 2 to 8 carbon atoms, or cycloalkyl of 3 to 6 carbon atoms,

$R^3$, $R^4$ and $R^5$ independently of one another are hydrogen, fluorine, chlorine, bromine or cyano, or alkyl of 1 to 4 carbon atoms which is unsubstituted or substituted by halogen, cyano, $C_1$-$C_4$-alkoxy or $C_1$-$C_4$-alkylthio,

X is oxygen or sulfur, and

Y is hydrogen, fluorine, chlorine or bromine.

2. A pesticide containing a fluoroethoxyphenyl (di)thiophosphate of the formula I as claimed in claim 1.

3. A pesticide containing inert additives and a fluoroethoxyphenyl (di)thiophosphate of the formula I as claimed in claim 1.

4. The use of a fluoroethoxyphenyl (di)thiophosphate of the formula I as claimed in claim 1 for combating pests.

5. A process for combating pests, wherein a fluoroethoxyphenyl (di)thiophosphate of the formula I as claimed in claim 1 is allowed to act on the pests and/or their habitat.

6. A process for the manufacture of a fluoroethoxyphenyl (di)thiophosphate of the formula I as claimed in claim 1, wherein an O,S-dialkylphosphoric acid chloride of the formula II

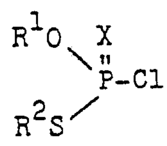

(II)

where

$R^1$, $R^2$ and X have the meanings given in claim 1, is reacted with a fluoroethoxyphenol of the formula

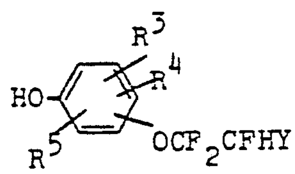

(III)

where

$R^3$, $R^4$ and $R^5$ have the meanings given in claim 1, in the presence of absence of an acid acceptor and in the presence or absence of a diluent, or with a salt of a fluoroethoxyphenol of the formula III, in the presence or absence of a diluent.

**Revendications**

1. Esters d'acides fluoréthoxyphényl-(di)thiophosphoriques de la formule

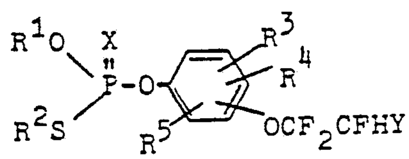

(I)

dans laquelle

$R^1$ désigne un radical alkyle en $C_1$ à $C_3$,

$R^2$ désigne un radical alkyle en $C_1$ à $C_5$, un groupe alcoxy-alkyle ou alkyl-thio-alkyle en $C_2$ à $C_8$ ou un groupe cycloalkyle en $C_3$ à $C_6$,

$R^3$, $R^4$ et $R^5$ désignent chacun, indépendamment des autres, un atome d'hydrogène, de fluor, de chlore ou de brome, un groupe cyano ou un radical alkyle en $C_1$ à $C_4$, éventuellement halo-, cyano-, alcoxy (en $C_1$ à $C_4$)- ou alkyl (en $C_1$ à $C_4$)-thio-substitué,

X désigne un atome d'oxygène ou de soufre et

Y un atome d'hydrogène, de fluor, de chlore ou de brome.

2. Composition parasticide, contenant un ester d'acide fluoréthoxyphényl-(di)thio-phosphorique de la formule I selon la revendication 1.

3. Composition parasiticide, contenant un ester d'acide fluoréthoxyphényl-(di)thio-phosphorique de la formule I selon la revendication 1 et des additifs inertes.

4. Utilisation d'esters d'acides fluoréthoxyphényl-(di)thio-phosphoriques de la formule I selon la revendication 1 pour combattre des parasites.

5. Procédé de lutte contre des parasites, caractérisé en ce que l'on fait agir un ester d'acide fluoréthoxyphényl-(di)thio-phosphorique de la formule I selon la revendication 1 sur les parasites et (ou) leur biotope.

6. Procédé de préparation d'esters d'acides fluoréthoxyphényl-(di)thio-phosphoriques de la formule I selon la revendication 1, caractérisé en ce que l'on fait réagir un chlorure d'ester d'acide O,S-dialkyl-phosphorique de la formule II

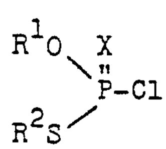

(II)

dans laquelle

$R^1$, $R^2$ et X possèdent les significations définies dans la revendication 1, éventuellement dans un diluant et (ou) en présence d'un agent fixant l'acide, avec un fluoréthoxy-phénol de la formule III

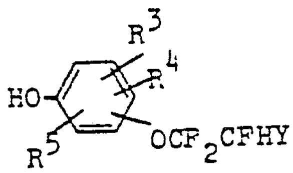

(III)

dans laquelle

$R^3$, $R^4$ et $R^5$ possèdent les significations définies dans la revendication 1, ou, éventuellement dans un diluant, avec un sel d'un fluoréthoxy-phénol de la formule III.